# DEMANDE DE BREVET EUROPEEN

(11) **EP 1 564 468 A1**
(43) Date de publication de la demande: **17.08.2005**
(21) Numéro de dépôt: 05290073.5
(22) Date de dépôt: 12.01.2005
(51) Int. Cl.: F16K 31/46

(54) **Dispositif de commande d'un organe d'obturation**

(30) Priorité: 13.02.2004 FR 0401484
(71) Demandeur: GAZ DE FRANCE, 75017 Paris (FR)
(72) Inventeur: Grandveau, Gilles, 95150 Taverny (FR); Marquer, Olivier, 92420 Vaucresson (FR)
(74) Mandataire: Berger, Helmut

(57) **Abrégé**

L'invention concerne un dispositif de commande d'un organe d'obturation d'un circuit de fluide.

Selon l'invention, le dispositif comprend des moyens de commande déportés (30) disposés à distance de l'organe d'obturation et actionnables manuellement pour produire sélectivement une commande d'ouverture ou de fermeture de l'organe d'obturation, des moyens d'actionnement mécaniques (40) coopérant avec l'organe d'obturation, et des moyens de transmission mécaniques (50) de la commande d'ouverture ou de fermeture des moyens de commande déportés (30) aux moyens d'actionnement (40) par l'intermédiaire d'au moins un câble d'actionnement mécanique gainé (51), les moyens d'actionnement (40) faisant passer l'organe d'obturation en configuration d'autorisation de circulation du fluide quand ils reçoivent une commande d'ouverture et en configuration d'interdiction quand ils reçoivent une commande de fermeture.

## Description

L'invention concerne en général les circuits de fluide, et en particulier, mais pas exclusivement, les circuits de distribution de gaz combustible (gaz naturel, GPL).

Plus précisément, l'invention concerne selon un premier aspect un dispositif de commande d'un organe d'obturation d'un circuit de fluide, cet organe adoptant sélectivement une configuration d'autorisation de la circulation du fluide dans le circuit ou une configuration d'interdiction de cette circulation.

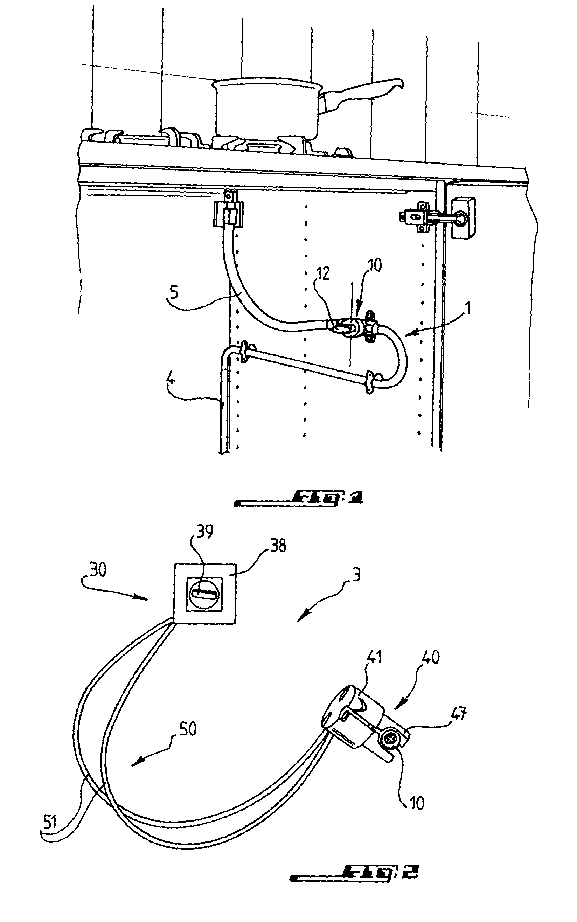

Sur les circuits de gaz naturel alimentant les appareils de cuisson chez les particuliers, les organes d'obturation sont des vannes à boisseaux sphériques, commandées manuellement à l'aide de leviers ou de têtes mobiles en rotation. Les règlements de sécurité en vigueur précisent que ces vannes d'arrêt doivent rester accessibles. En conséquence, dans les cuisines de type « intégré », les vannes sont disposées fréquemment à l'intérieur d'un meuble, comme représenté sur la figure 1, ce qui rend le tracé du circuit de gaz compliqué.

De plus, le plombier doit intervenir avant le cuisiniste pour poser la partie amont du circuit de gaz, puis après la mise en place des meubles de cuisine pour poser la partie terminale du circuit située à l'intérieur des meubles, poser la vanne d'arrêt et pour raccorder les appareils de cuisson au circuit.

Dans ce contexte, la présente invention a pour but de pallier les défauts mentionnés ci-dessus, et de faciliter pour les installateurs la mise en place et le raccordement des appareils ménagers utilisant un fluide.

A cette fin, le dispositif de l'invention, par ailleurs conforme à la définition générique qu'en donne le préambule ci-dessus, est essentiellement caractérisé en ce que qu'il comprend des moyens de commande déportés disposés à distance de l'organe d'obturation et actionnables manuellement pour produire sélectivement une commande d'ouverture ou de fermeture de l'organe d'obturation, des moyens d'actionnement mécaniques coopérant avec l'organe d'obturation , et des moyens de transmission mécaniques de la commande d'ouverture ou de fermeture des moyens de commande déportés aux moyens d'actionnement par l'intermédiaire d'au moins un câble d'actionnement mécanique gainé, les moyens d'actionnement faisant passer l'organe d'obturation en configuration d'autorisation quand ils reçoivent une commande d'ouverture et en configuration d'interdiction quand ils reçoivent une commande de fermeture.

Dans un mode de réalisation possible de l'invention, le câble d'actionnement comprend une gaine fixe et un fil métallique mobile en translation dans la gaine et lié d'un côté aux moyens de commande déportés et de l'autre aux moyens d'actionnement, le fil étant entraîné en translation par les moyens de commande déportés dans un premier sens quand ceux-ci sont actionnés pour produire une commande d'ouverture et dans un second sens opposé au premier pour une commande de fermeture.

Avantageusement, les moyens de transmission comprennent deux câbles d'actionnement dont les fils respectifs sont déplacés dans des sens mutuellement opposés par les moyens de commande déportés.

De préférence, l'organe d'obturation comprend une tête de commande mobile en rotation autour d'un axe longitudinal entre des positions angulaires d'interdiction et d'autorisation dans lesquelles l'organe d'obturation adopte respectivement ses configurations d'interdiction et d'autorisation, les moyens d'actionnement comprenant un carter récepteur fixe et un axe récepteur mobile en rotation dans le carter récepteur autour de l'axe longitudinal et solidaire en rotation de la tête de commande, des extrémités réceptrices respectives des fils des câbles d'actionnement étant liés à l'axe récepteur et entraînant cet axe récepteur en rotation quand les fils sont déplacés par les moyens de commande déportés.

Dans ce cas, les extrémités réceptrices des deux fils sont liés à des points de l'axe récepteur symétrique par rapport à un plan de symétrie contenant l'axe longitudinal, à distance l'un de l'autre.

De plus, l'axe récepteur comprend une gorge dans laquelle s'enroulent les fils des câbles d'actionnement quand les fils sont déplacés par les moyens de commande déportés.

Par exemple, des premières extrémités des gaines des câbles d'actionnement sont rigidement fixées dans des orifices du carter récepteur débouchant dans la gorge.

Selon une autre caractéristique de l'invention, les moyens de commande déportés comprennent un carter de commande fixe, et un axe de commande mobile manuellement dans le carter de commande en rotation autour d'un axe de rotation entre une position angulaire de fermeture et une position angulaire d'ouverture, des parties d'extrémités de commande respectives des fils des câbles d'actionnement, opposées aux extrémités réceptrices, étant rigidement fixées sur l'axe de commande, la rotation de cet axe de commande entre ses positions angulaires de fermeture et d'ouverture constituant dans un sens la commande d'ouverture et en sens inverse la commande de fermeture.

Dans ce cas, l'axe de commande comprend une partie cylindrique coaxiale à l'axe de rotation prolongée d'un côté axial avant par une partie tronconique coaxiale à l'axe de rotation convergeante à partir de la partie cylindrique, les moyens de commande déportés comprenant une noix de serrage cylindrique enfilée sur la partie tronconique venant fixer rigidement les parties d'extrémité de commande des fils par pression entre la noix et la partie tronconique.

Avantageusement, la noix de serrage présente une fente de positionnement des parties d'extrémité de commande des fils autour de l'axe de commande.

De préférence, la partie cylindrique de l'axe de commande porte une gorge de commande dans laquelle s'enroulent les fils des câbles d'actionnement quand les moyens de commande déportés sont actionnés.

Par exemple, la gorge de commande est délimitée du côté axial avant par un bord libre de la noix de commande et d'un côté axial opposé au côté avant par un rebord en saillie sur la partie cylindrique de l'axe de commande.

En outre, des secondes extrémités des gaines des câbles d'actionnement opposées aux premières sont rigidement fixées dans des orifices du carter de commande débouchant dans la gorge de commande.

Dans ce cas, les orifices du carter de commande débouchent dans une partie de la gorge de commande opposée à la fente de positionnement de la noix de serrage par rapport à l'axe de rotation, les deux fils s'étendant à partir des orifices jusqu'à la fente en suivant deux côtés mutuellement opposés de la gorge.

Selon une autre caractéristique de l'invention, le circuit de fluide est fixé sur un mur, et les moyens de commande déportés et/ou les moyens d'actionnement et/ou les câbles d'actionnement sont encastrés dans ledit mur.

Par exemple, le fluide est un gaz combustible, de préférence du gaz naturel.

Dans ce cas, le circuit de fluide est un circuit de distribution de gaz combustible chez les particuliers.

Selon un second aspect, l'invention concerne une méthode de montage d'un dispositif de commande pour un organe d'obturation d'un circuit de fluide présentant au moins certaines des caractéristiques précédentes, caractérisée en ce qu'elle comprend au moins les étapes suivantes :
1/ Pré-assembler les moyens d'actionnement et raccorder les câbles d'actionnement aux moyens d'actionnement, en usine ;
2/ Monter les moyens d'actionnement sur l'organe d'obturation, sur site ;
3/ Assembler les moyens de commande déportés et raccorder les câbles d'actionnement aux moyens de commande déportés, sur site.

Alternativement, les câbles d'actionnement comprennent chacun au moins deux tronçons et des moyens de raccordement mutuel des deux tronçons, et la méthode comprend alors au moins les étapes suivantes :
1/ Pré-assembler les moyens d'actionnement et raccorder un des tronçons de chaque câble d'actionnement aux moyens d'actionnement, en usine ;
2/ Pré-assembler les moyens de commande déportés et raccorder l'autre tronçon de chaque câble d'actionnement aux moyens de commande déportés, en usine ;
3/ Monter les moyens d'actionnement sur l'organe d'obturation, sur site ;
4/ Monter les moyens de commande déportés sur un support, sur site ;
5/ Raccorder mutuellement les deux tronçons de chaque câble d'actionnement à l'aide des moyens de raccordement, sur site.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective d'un circuit de distribution de gaz alimentant une table de cuisson, muni d'un dispositif de commande conforme à l'art antérieur,
- la figure 2 est une vue en perspective d'un dispositif de commande de l'invention, avant montage sur le circuit de distribution,
- la figure 3 est une vue en perspective similaire à la figure 1, montrant le dispositif de la figure 2 après installation,
- la figure 4 est une vue en perspective montrant l'organe d'obturation et les moyens d'actionnement de la figure 2 à l'état désassemblé,
- les figures 5A et 5B sont des vues respectivement d'un côté arrière et d'un côté avant du carter et de l'axe récepteur de la figure 4 assemblés aux câbles d'actionnement,
- la figure 6 est une vue d'un côté avant de l'ensemble des figures 5A et 5B équipé du palier de friction de la figure 4,
- la figure 7 est une vue d'un côté arrière de l'ensemble de la figures 6 équipé du palier arrière et de l'épingle de fixation de la figure 4,
- la figure 8 est une vue d'un côté avant de l'ensemble de la figure 7 inséré dans le boîtier d'encastrement récepteur de la figure 4,
- la figure 9 est une vue en perspective de la butée d'angle et de l'étrier de support de la figure 4 montés sur l'organe d'obturation,
- la figure 10 est une vue d'un côté avant de l'ensemble de la figure 8 monté sur l'ensemble de la figure 9,
- la figure 11 est une vue en coupe axiale de l'ensemble de la figure 10,
- la figure 12 est une vue en perspective montrant les moyens de commande déportés de la figure 2 à l'état désassemblé,
- la figure 13 est une vue du côté avant des extrémités des câbles sortant du boîtier de la figure 12, ainsi que du carter et de l'axe de commande de la figure 12 assemblés,
- la figure 14 est une vue du côté avant des éléments de la figure 13 après montage des câbles dans le carter,
- la figure 15 est une vue du côté avant de l'ensemble de la figure 14 muni de la noix de serrage de la figure 12,
- les figures 16A et 16B sont des vues respectivement du côté avant et du côté arrière de l'ensemble formé par l'axe de commande, la noix de serrage et l'écrou de la figure 12, assemblé aux câbles,
- la figure 17 est une vue du côté avant de l'ensemble de la figure 15 disposé dans le boîtier de la figure 12 encastré dans un mur, muni de l'écrou de serrage,
- la figure 18 est une vue de l'ensemble de la figure 17 équipé du palier de friction avant de la figure 12,
- la figure 19A est une vue d'un côté arrière de la manette de la figure 12, et la figure 19B est une vue du côté avant de l'ensemble de la figure 18 muni de la manette de la figure 19A,
- la figure 20 est une vue du côté avant de l'ensemble des figures 19A et 19B équipé de la plaque de support du cadre de la figure 12,
- les figures 21A et 21B sont des vues du côté avant de l'ensemble de la figure 20 muni de son cadre, la manette étant respectivement en position d'ouverture et en position de fermeture,
- la figure 22 est une vue en coupe des moyens de commande déportés dans un plan contenant l'axe de rotation,
- les figures 23A et 23B sont des schémas de principe montrant le passage des fils dans les moyens de commande déportés, respectivement pour le mode de réalisation préféré de l'invention et dans une variante de réalisation, et
- la figure 24 est un schéma de principe illustrant une variante de réalisation de l'invention dans laquelle les moyens d'actionnement et les moyens de commande déportés peuvent être montés en usine.

La figure 1 représente une portion d'un circuit 1 de distribution de gaz naturel alimentant une table de cuisson munie de brûleurs au gaz. Ce circuit comprend une portion 4 constituée d'une tuyauterie en cuivre, un organe 10 d'obturation du circuit 1, et un tuyau flexible 5. L'organe d'obturation 10 comprend un corps 11 présentant un orifice d'entrée auquel est raccordée une extrémité de la tuyauterie 4 et un orifice de sortie, la tuyauterie flexible raccordant l'orifice de sortie à la table de cuisson.

La tuyauterie de cuivre 4 est rigidement fixée sur un support par tous moyens adaptés.

L'organe d'obturation 10 adopte sélectivement une configuration d'autorisation de la circulation du fluide dans le circuit 1 ou une configuration d'interdiction de cette circulation.

Un dispositif 3 commande l'organe d'obturation 10 et permet de le faire passer de sa configuration d'autorisation à sa configuration d'interdiction, et réciproquement.

Selon l'invention, le dispositif de commande 3 comprend des moyens de commande déportés 30 disposés à distance de l'organe d'obturation 10 et actionnables manuellement pour produire sélectivement une commande d'ouverture ou de fermeture de l'organe d'obturation 10, des moyens d'actionnement mécaniques 40 coopérant avec l'organe d'obturation 10, et des moyens 50 de transmission mécaniques de la commande d'ouverture ou de fermeture des moyens de commande déportés 30 aux moyens d'actionnement 40 par l'intermédiaire d'au moins un câble d'actionnement mécanique gainé 51.

Les moyens d'actionnement 40 font passer l'organe d'obturation 10 en configuration d'autorisation quand ils reçoivent une commande d'ouverture et en configuration d'interdiction quand ils reçoivent une commande de fermeture.

Les moyens d'actionnement 40 sont disposés à proximité immédiate de l'organe d'obturation 10 et coopèrent directement avec celui-ci.

On voit sur la figure 3 que les moyens de commande 30, du fait qu'ils sont déportés, peuvent être disposés de façon commode au-dessus de la table de cuisson, en un point facilement accessible. L'organe d'obturation 10 reste en dessous de la table de cuisson et n'a pas à être implanté en une zone accessible. On peut donc le disposer de façon à obtenir un tracé du circuit 1 le plus simple possible.

Le câble d'actionnement 51 s'étend entre les moyens de commande déportés 30 et les moyens d'actionnement 40. Il comprend une gaine 52 fixe s'étendant sur pratiquement toute la longueur du câble 51 et un fil métallique 53 s'étendant dans la gaine 52, sur toute la longueur de celle-ci, et dépassant de la gaine 52 aux deux extrémités opposées du câble 51. Le fil 53 est mobile en translation dans la gaine 52 et est lié d'un côté aux moyens de commande déportés 30 et d'un côté opposé aux moyens d'actionnement 40.

Quand les moyens de commande déportés 30 sont actionnés pour produire une commande d'ouverture, le fil 53 est entraîné en translation par ces moyens dans un premier sens, soit vers les moyens de commande déportés 30 soit vers les moyens d'actionnement 40. Quand les moyens de commande déportés 30 sont actionnés pour produire une commande de fermeture, le fil 53 est entraîné dans un second sens opposé au premier.

De préférence, les moyens de transmission 50 comprennent deux câbles d'actionnement 51 pratiquement identiques, dont les fils 53 respectifs sont déplacés dans des sens mutuellement opposés par les moyens de commande déportés 30.

Quand les moyens de commande déportés 30 produisent une commande d'ouverture, le fil 53 d'un premier câble 51 se déplace vers les moyens de commande déportés 30 et le fil 53 du second câble 51 se déplace vers les moyens d'actionnement 40. Inversement, quand les moyens de commande déportés 30 produisent une commande de fermeture, le fil 53 du premier câble 51 se déplace vers les moyens d'actionnement 40 et le fil 53 du second câble 51 se déplace vers les moyens de commande déportés 30.

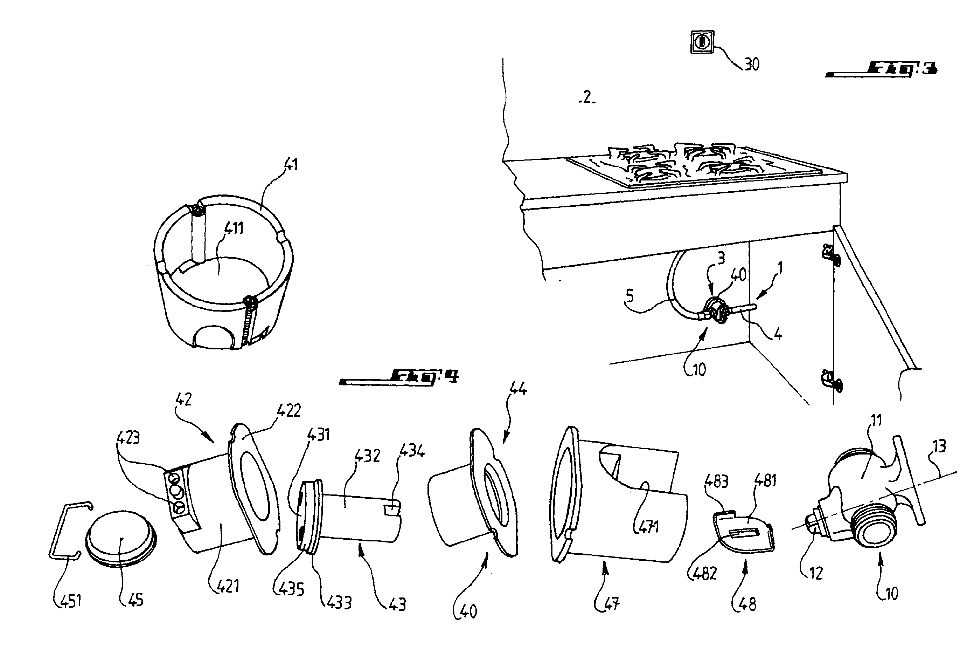

On va maintenant, en référence aux figures 4 à 11, décrire la constitution des moyens d'actionnement 40.

On précisera d'abord que l'organe d'obturation 10 comprend une tête de commande 12 mobile en rotation autour d'un axe longitudinal 13 entre des positions angulaires d'interdiction et d'autorisation dans lesquelles l'organe d'obturation 10 adopte respectivement ses configurations d'interdiction et d'autorisation. Cette tête 12 fait saillie longitudinalement hors du corps 11, d'un côté arrière, et présente perpendiculairement à la direction longitudinale une section rectangulaire.

On voit sur la figure 4 que ces moyens d'actionnement 40 comprennent une boîte d'encastrement cylindrique 41 fixe, un carter récepteur cylindrique 42 fixe disposé dans la boîte d'encastrement 41, un axe récepteur 43 mobile en rotation dans le carter récepteur 42 autour de l'axe longitudinal 13 et solidaire en rotation de la tête de commande 12, un palier de friction 44 interposé radialement entre l'axe récepteur 43 et le carter 42, un palier arrière 45 interposé entre une face axiale arrière 431 de l'axe récepteur 43 et un fond 411 de la boîte d'encastrement 41, un étrier de support 47 rigidement fixé sur l'organe d'obturation 10 et une butée d'angle 48 solidaire en rotation de la tête de commande 12 et définissant les positions angulaires d'interdiction et d'autorisation de celle-ci.

La boîte d'encastrement 41 est coaxiale à l'axe longitudinal 13, ouverte d'un côté axial avant et fermée par le fond 411 d'un côté axial arrière. Elle présente des orifices radiaux de passage des câbles 51 à proximité du fond 411.

Cette boîte est de préférence une boîte du commerce, utilisée typiquement pour l'encastrement de prises ou d'interrupteurs de circuits électriques dans des cloisons de briques de plâtre.

Le carter récepteur 42 comprend une virole cylindrique 421 creuse coaxiale à l'axe principal et de diamètre extérieur inférieur au diamètre intérieur de la boîte d'encastrement 41, et une couronne 422 radiale s'étendant vers l'extérieur à partir d'une extrémité axiale avant de la virole 421. La couronne 422 présente d'un côté avant une face plane, perpendiculaire à l'axe longitudinal 13.

L'axe récepteur 43 comprend une partie cylindrique avant 432 pleine coaxiale à l'axe principal 13, et une partie arrière en disque 433 coaxiale à l'axe principal 13 et solidaire d'une extrémité axiale arrière de la partie cylindrique 432.

Une extrémité axiale avant de la partie cylindrique 432 porte une fente droite 434 s'étendant sur un diamètre de la partie 432 et s'ouvrant vers l'avant. La tête de commande 12 est engagée dans cette fente 434, celle-ci présentant une forme conjuguée à celle de la tête de telle sorte que l'axe récepteur 43 et la tête de commande 12 sont solidaires en rotation autour de l'axe principal 13.

La partie en disque 433 s'étend dans un plan perpendiculaire à l'axe principal 13, et définit la face axiale arrière 431 de l'axe récepteur 43.

Une gorge 435 est ménagée sur un bord radial extérieur de la partie cylindrique arrière 433, cette gorge s'ouvrant vers l'arrière et vers l'extérieur.

Le diamètre extérieur de la partie en disque 433 correspond au diamètre intérieur de la virole 421 du carter récepteur 42, et le diamètre extérieur de la partie cylindrique 432 est inférieur au diamètre extérieur de la partie en disque 433.

Le palier de friction 44 présente une forme semblable à celle du carter récepteur 42, avec une virole cylindrique creuse et une couronne radiale s'étendant vers l'extérieur à partir d'une extrémité axiale avant de la virole.

La virole est engagée entre la partie cylindrique avant 431 de l'axe récepteur 43 et le carter récepteur 42 et porte à la fois contre une face interne de l'axe et contre une face externe de la partie avant. Elle est en butée d'un côté arrière sur la partie en disque 433 de l'axe récepteur 43.

La couronne du palier de friction 44 est en appui sur une face avant de la couronne 422 du carter récepteur 42. Elle présente exactement la même forme que la couronne 422 du carter récepteur 42, qu'elle recouvre entièrement.

Le palier de friction 44 est réalisé en un matériau de type téflon, à faible coefficient de friction, facilitant la rotation de l'axe récepteur 43 dans le carter récepteur 42.

Le palier arrière 45 est un disque d'un matériau à faible coefficient de friction, de type téflon. Il est plaqué contre la face axiale arrière 431 de l'axe récepteur par une épingle de fixation 451.

Cette épingle 451 est constituée d'un fil métallique plié en U, s'étendant selon un diamètre du palier arrière 45, d'un côté arrière de celui-ci, et présentant des extrémités opposées pliées vers l'intérieur venant s'engager dans deux trous de fixation ménagés dans la virole 421 du carter récepteur 42. Ces deux trous sont ménagés sur une face extérieure de cette virole et sont diamétralement opposés.

La butée d'angle 48 comprend une plaquette métallique 481 percée en son centre d'une ouverture 482 dans laquelle est engagée la tête de commande 12, et deux pattes de blocage 483. La plaquette métallique 481 est plane et s'étend dans un plan perpendiculaire à l'axe principal 13. L'ouverture 482 est de forme conjuguée à celle de la tête, de telle sorte que la butée d'angle 48 est solidaire en rotation de la tête de commande 12. Les pattes 483 sont constituées par des parties de la plaquette 481 pliées vers l'avant.

L'une ou l'autre des pattes vient en butée contre le corps 11 de l'organe d'obturation 10 quand la tête de commande 12 atteint ses positions angulaires d'autorisation ou d'interdiction, bloquant cette tête en rotation et définissant ainsi lesdites positions angulaires.

L'étrier de support 47 comprend une virole coaxiale à l'axe longitudinal 13 et une couronne radiale s'étendant vers l'extérieur à partir d'une extrémité arrière de la virole. Cette virole est découpée de deux profondes échancrures 471 en U, diamétralement opposées, ouvertes sur un bord axial avant de la virole. L'étrier est monté à cheval sur le corps 11 de l'organe d'obturation 10, les orifices d'entrée et de sortie du corps 11 étant engagés dans les échancrures 471, la partie arrière de la virole entourant la tête de commande 12.

Des extrémités réceptrices 531 respectives des fils 53 des câbles d'actionnement 51 sont rigidement fixées sur la face axiale arrière 431 de l'axe récepteur 43 et entraînent cet axe récepteur 43 en rotation autour de l'axe longitudinal 13, à l'intérieur du carter récepteur 42, quand les fils 53 sont déplacés par les moyens de commande déportés 30.

A cet effet, les extrémités réceptrices 531 des deux fils 53 sont fixées sur des points de ladite face axiale arrière 431 symétrique par rapport à un plan de symétrie contenant l'axe longitudinal 13, à distance l'un de l'autre.

On voit sur la figure 5A qu'ils sont de préférence fixés en deux points diamétralement opposés par rapport à l'axe principal 13, à proximité du bord radialement extérieur de la face axiale arrière 431.

La virole 421 du carter récepteur 42 porte à une extrémité axiale arrière une excroissance radiale percée de deux orifices 423 formant des sièges pour des premières extrémités 521 des gaines 52 des câbles d'actionnement 51. Lesdites extrémités sont engagées et sont rigidement fixées dans ces orifices 423.

Par ailleurs, les deux orifices 423 débouchent tangentiellement dans la gorge 435 de l'axe récepteur 43.

On voit sur la figure 5A que les extrémités réceptrices 531 des fils 53 se terminent par des boules 533 insérées dans des logements creusés dans la face axiale arrière 431 de l'axe récepteur 43. Deux rainures 436 creusées dans cette face débouchent chacune d'un côté dans un logement et de l'autre côté sur le bord extérieur de ladite face, dans la gorge 435, sensiblement à l'opposé des orifices 423. Ces deux rainures convergent légèrement l'une vers l'autre à partir des logements des boules. Les boules 533 sont bloquées dans leurs logements du fait que les rainures 436 sont trop étroites pour les laisser passer.

Les fils 53 des deux câbles 51 traversent chacun un orifice 423, s'enroulent autour de l'axe récepteur 43 dans la gorge 435, et quittent cette gorge 435 pour suivre chacun une rainure 436.

On notera que les deux orifices débouchent de façon divergente dans la gorge 435 à partir de l'excroissance radiale, de telle sorte que les fils 53 s'enroulent en sens inverses à partir des orifices 423, de deux côtés mutuellement opposés de la gorge 435.

Les fils 51 se croisent à l'opposé des orifices 423 avant de s'engager dans les rainures 436, chaque fil 53 s'engageant dans la rainure 436 opposée au côté de la gorge 435 le long duquel il est enroulé.

Quand les moyens de commande déportés 30 entraînent l'axe récepteur 43 en rotation, les fils 53 des câbles d'actionnement s'enroulent dans la gorge 435, celle-ci suivant de poulie d'enroulement pour les câbles 51.

Les figures 5A/5B à 10 illustrent les différentes étapes de l'assemblage des moyens d'actionnement 40.

On engage d'abord les câbles 51 à travers les orifices radiaux de la boîte d'encastrement 41, on fixe les gaines 52 dans les orifices 423 du carter 42, et les boules 533 des fils 53 dans les logements correspondants de l'axe récepteur 43. Puis on dispose les fils 53 le long des rainures 436 et de la gorge 435, et on insère l'axe récepteur 43 dans le carter 42. On se trouve alors dans la situation des figures 5A et 5B.

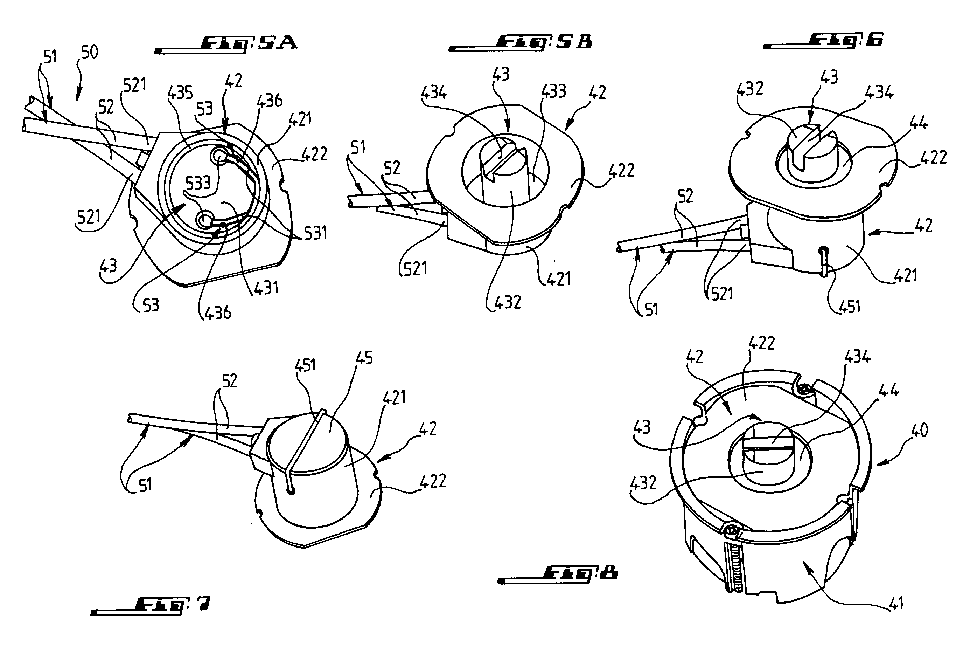

On monte ensuite le palier de friction 44 entre l'axe et le carter (figure 6), et on fixe le palier arrière 45 sur la face axiale arrière 431 de l'axe récepteur 43 à l'aide de l'épingle de fixation 451 (figure 7). Ce palier arrière 45 vient fermer la gorge 435 du côté arrière.

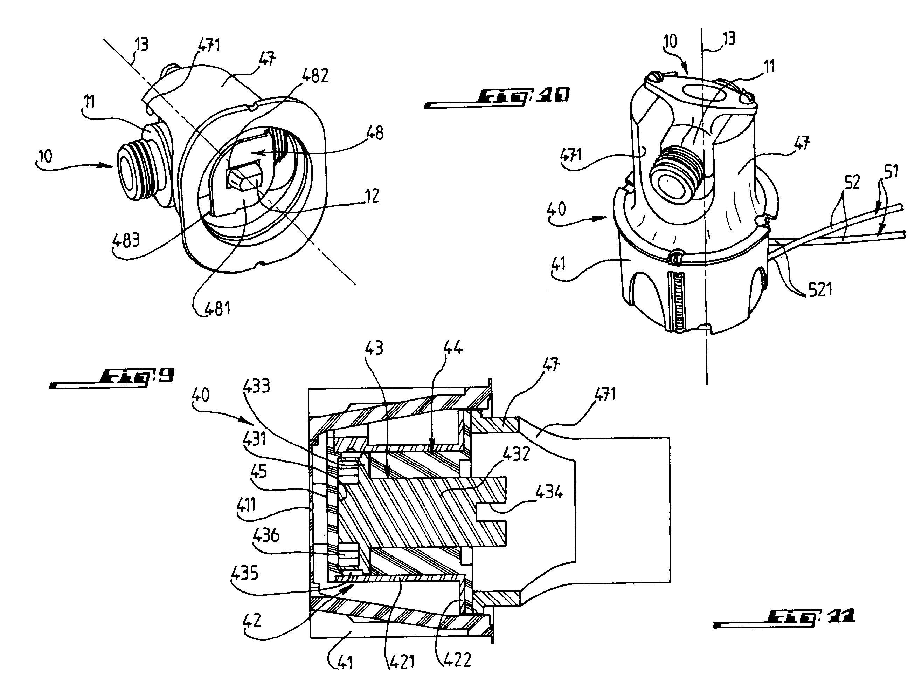

On insère ensuite l'ensemble formé par les paliers, le carter et l'axe dans la boîte d'encastrement 41 (figure 8). L'extrémité de l'axe récepteur 43 portant la fente 434 fait saillie axialement vers l'avant par rapport au palier de friction 44. On notera que les couronnes respectives du carter récepteur 42 et du palier de friction 44 portent sur leurs bords extérieurs chacun au moins une encoche coopérant avec une nervure axiale disposée le long de la boîte d'encastrement 41 pour bloquer en rotation le carter 42 et le palier 44 relativement à la boîte 41.

On monte ensuite la butée d'angle 48 sur la tête de commande 12 de l'organe d'obturation 10, on dispose l'étrier de support 47 autour de la tête de commande 12 (figure 9), et on fixe cet étrier sur le corps 11 de l'organe d'obturation, par un côté avant, à l'aide de vis (figure 10).

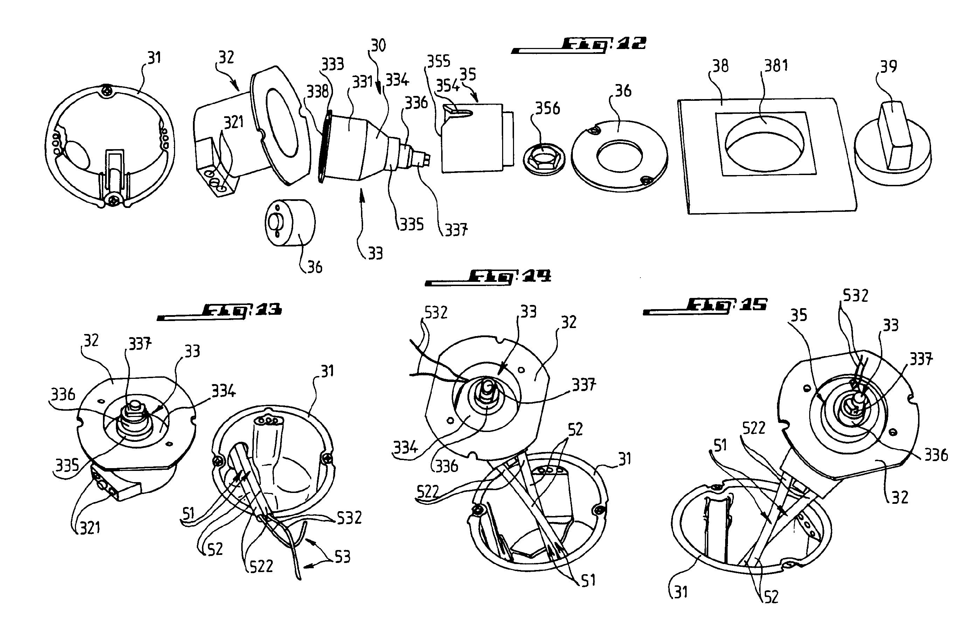

Enfin, on engage un côté arrière de l'étrier de support 47 dans la boîte d'encastrement 41 (figures 10 et 11). La couronne de l'étrier de support 47 vient se plaquer d'un côté avant de la couronne du palier de friction 44, et la tête de commande 12 vient s'engager dans la fente 434 de l'axe récepteur 43. Cet axe appuie axialement sur la butée d'angle 48 et plaque celle-ci contre un épaulement du corps 11.

On va maintenant, en référence aux figures 12 à 22, décrire la constitution des moyens de commande déportés 30.

On voit sur la figure 12 que ces moyens de commande 30 comprennent un boîtier cylindrique 31 fixe, un carter de commande cylindrique 32 fixe disposé dans le boîtier 31, un axe de commande 33 mobile en rotation dans le carter de commande 32 autour d'un axe de rotation 34 entre une position angulaire de fermeture et une position angulaire d'ouverture, une noix de serrage 35 apte à fixer des parties d'extrémité de commande 532 des fils 53 sur l'axe de commande 33, un écrou 356 de fixation de la noix de serrage 35 sur l'axe de commande 33, un palier de fond 36 interposé axialement entre un fond du boîtier 31 et une extrémité axiale arrière de l'axe de commande 33, un palier avant 37 interposé radialement entre la noix de serrage 35 et le carter de commande 32, un cadre 38 solidaire d'un côté avant du boîtier 31 et présentant une ouverture ronde 381 dans laquelle est engagée axialement une extrémité avant de l'axe de commande 33, et une manette d'actionnement 39 disposée dans l'ouverture ronde 381 et solidaire de l'axe de commande 33 en rotation autour de l'axe de rotation 34.

Le boîtier 31 est exactement identique à la boîte d'encastrement 41 des moyens d'actionnement 40. Le carter de commande 32 est semblable au carter récepteur 42 mais, à la différence de ce dernier, présente une virole fermée par un fond du côté arrière.

Les parties d'extrémité de commande 532 des fils 53 sont opposées aux extrémités réceptrices 531 et sont engagées dans les ouvertures radiales du boîtier 31, comme le montre la figure 13.

L'axe de commande 33 comprend une partie cylindrique 331 prolongée d'un côté axial avant par une partie tronconique 334 convergeante à partir de la partie cylindrique 331. La partie tronconique 334 se prolonge vers l'avant par une seconde partie cylindrique 335 de diamètre réduit par rapport à la partie cylindrique arrière 331, puis par une partie filetée 336 de diamètre encore réduit par rapport à la seconde partie cylindrique 335, puis par une tête d'accrochage 337. Les différentes parties de l'axe de commande 33 sont toutes coaxiales à l'axe de rotation 34.

L'axe de commande 33 comprend enfin un rebord en saillie 333 radial s'étendant vers l'extérieur à partir de l'extrémité axiale arrière de cet axe, et un logement axial 338 creusé au centre de sa face axiale arrière, le palier de fond 36 étant disposé dans ce logement axial.

La noix de serrage 35 présente une forme générale cylindrique creuse et est coaxiale à l'axe de rotation 34. Elle est enfilée sur l'axe de commande 33 et présente une surface intérieure de forme complémentaire de celle de l'axe de commande 33, avec un premier tronçon axial 351 cylindrique de diamètre intérieur correspondant au diamètre extérieur de la partie cylindrique 331 de l'axe, un second tronçon axial 352 tronconique exactement de même forme que la surface extérieure de la partie tronconique 334 de l'axe, et un troisième tronçon axial 353 cylindrique de diamètre intérieur correspondant au diamètre extérieur de la seconde partie cylindrique 335 de l'axe.

La noix de serrage 35 est délimitée d'un côté extérieur par une première surface cylindrique de diamètre correspondant au diamètre intérieur du carter de commande 32, prolongée vers l'avant par une seconde surface cylindrique de diamètre réduit par rapport à la première. Ces deux surfaces sont reliées par un épaulement perpendiculaire à l'axe de rotation 34.

Quand la noix de serrage 35 est enfilée axialement sur l'axe de commande 33, le premier tronçon 351 vient contre la partie cylindrique 331, le troisième tronçon 353 vient contre la seconde partie cylindrique 335, le second tronçon 352 vient pincer axialement les parties d'extrémités 532 des fils 53 contre la partie tronconique 324 de l'axe, la partie filetée 336 et la tête 337 sortant en saillie d'un côté avant de la noix de serrage 35, comme le montre la figure 22.

L'écrou 355 est vissé sur la partie filetée 326 de l'axe et vient porter axialement sur une extrémité avant de la noix de serrage 35, sollicitant celle-ci vers l'arrière contre la partie tronconique 324 de l'axe.

Enfin, la partie cylindrique 331 de l'axe de commande 33 porte une gorge de commande 332 délimitée d'un côté axial arrière par le rebord en saillie 333 et d'un côté axial avant par un bord libre arrière circulaire 355 de la noix de serrage 35.

Le palier avant 37 comprend une virole cylindrique creuse et une couronne radiale s'étendant vers l'extérieur à partir d'une extrémité axiale avant de la virole.

La virole est engagée entre la seconde surface cylindrique extérieure de la noix de serrage 35 et le carter de commande 33 et porte à la fois contre ladite surface cylindrique et contre une face interne du carter. Elle est en butée d'un côté arrière sur l'épaulement entre les première et seconde surfaces cylindriques extérieures de la noix de serrage 35.

La couronne du palier avant 37 est plaquée contre un côté avant de la couronne du carter de commande 32.

Comme dans les moyens d'actionnement 40, la virole du carter de commande 32 porte à une extrémité axiale arrière une excroissance radiale percée de deux orifices 321 formant des sièges pour des secondes extrémités 522 des gaines 52 opposées aux premières extrémités 521. Lesdites extrémités sont engagées et sont rigidement fixées dans ces orifices 321.

Ces deux orifices 321 débouchent tangentiellement dans la gorge de commande 332 de l'axe de commande 33.

Les parties d'extrémité 532 des fils 53 traversent chacun un orifice 321, s'enroulent autour de l'axe de commande 33 dans la gorge 332 jusqu'à un côté de cette gorge opposé aux orifices 321, puis se rejoignent et quittent cette gorge 332 pour s'étendre axialement le long de l'axe de commande 33 vers l'avant.

On notera que les deux orifices débouchent de façon divergente dans la gorge 332 à partir de l'excroissance radiale, de telle sorte que les fils 53 s'enroulent en sens inverses à partir des orifices 321, de deux côtés mutuellement opposés de la gorge 332.

La noix de serrage 35 présente une fente de positionnement 354 des parties d'extrémité de commande 532 des fils 53 autour de l'axe de commande 33.

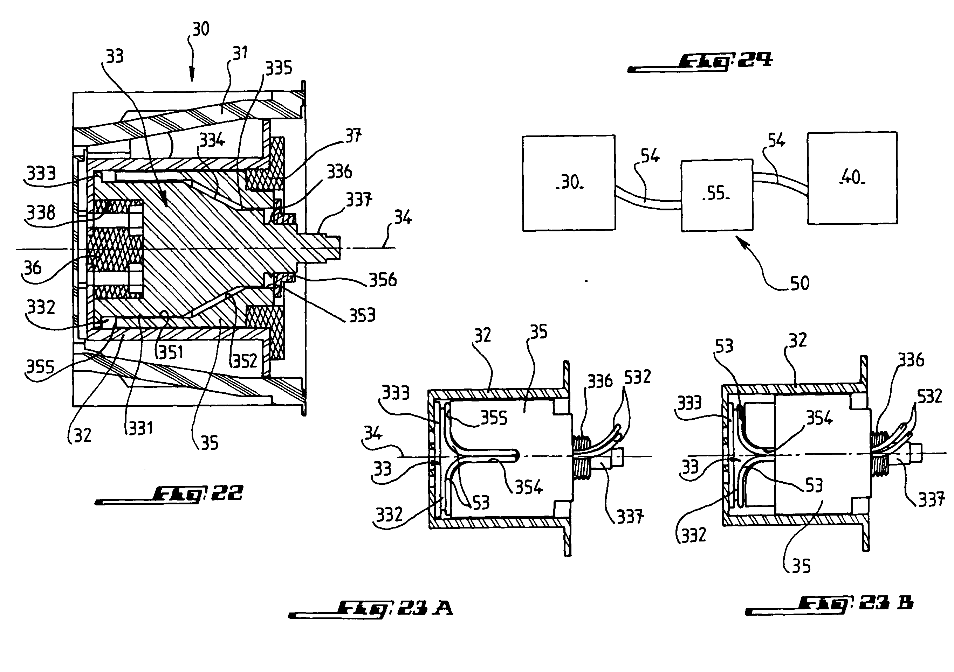

Comme on le voit sur les figures 16A et 23A, cette fente 354 est parallèle à l'axe de rotation 34 et ouverte d'un côté arrière de la noix de serrage 35. Elle s'étend le long de tout le premier tronçon 351 et sur une partie du second tronçon 352.

La fente 354 s'évase latéralement en débouchant d'un côté arrière, ses deux bords opposés formant chacun un arc de cercle sur 90° environ qui prolonge le bord libre circulaire arrière de la noix de serrage 35.

Les deux fils 53 en quittant la gorge 332 sont guidés par les bords arqués de la fente 354 jusqu'à ce qu'ils se rejoignent et s'engagent parallèlement, l'un contre l'autre, dans la fente 354, puis pénètrent entre la partie tronconique 334 et le second tronçon 352 de la noix de serrage 35. Les deux fils 53 sortent de la noix de serrage 35 par une encoche radiale pratiquée dans le troisième tronçon 353, d'un côté avant de la noix, et passent entre l'écrou 356 et le bord interne du palier avant 37, comme le montre la figure 16B.

On notera que le rebord en saillie 333 présente un diamètre extérieur correspondant au diamètre intérieur de la virole du carter 32, ce carter 32 venant donc fermer la gorge 332 d'un côté extérieur quand l'axe de commande 33 est inséré dans le carter 32.

Dans une variante de réalisation représentée sur la figure 23B, la gorge 332 et la fente de positionnement 354 sont creusées dans la partie cylindrique 331 de l'axe de commande 33. La fente 354 débouche d'un côté axial dans la gorge et de l'autre côté axial au niveau de la partie tronconique 334. Elle est évasée vers l'arrière par des bords arqués de guidage des fils 53, de la même façon que dans le mode de réalisation de la figure 23A. La noix de serrage 35 ne porte pas de fente du côté arrière.

Par ailleurs, le cadre 38 est un cadre connu en soi, utilisé typiquement pour les prises de courant ou les interrupteurs encastrés de circuits électriques. Il comprend un support métallique rectangulaire 382 vissé d'un côté avant du boîtier 31, et un cache plastique 383 rectangulaire fixé de façon amovible sur un côté avant du support 382. Le support 382 et le cache 383 s'étendent sensiblement perpendiculairement à l'axe de rotation 34, l'ouverture ronde 381 étant ménagée au centre du cache 383.

La tête d'accrochage 337 est située au centre de l'ouverture ronde 381. Elle présente une forme allongée et est engagée dans une rainure 391 ménagée d'un côté arrière de la manette 39, de telle sorte que l'axe de commande 33 et la manette 39 sont solidaires en rotation autour de l'axe de rotation 34. Une vis de serrage bloque la tête dans la rainure.

La manette 39 présente une forme générale en disque de forme correspondante à celle de l'ouverture ronde 381, et porte d'un côté avant un relief axial allongé s'étendant sur tout un diamètre du disque.

Un utilisateur peut ainsi saisir le relief et faire tourner la manette 39 autour de l'axe de rotation 34 de sensiblement un quart de tour. Une rotation d'un quart de tour dans un premier sens fait passer l'axe de commande 33 de sa position angulaire d'ouverture à sa position angulaire de fermeture, provoquant l'enroulement d'un fil 51 dans la gorge 332 et le déroulement de l'autre fil 51, et produisant ainsi la commande de fermeture.

Quand l'utilisateur ramène la manette à sa position initiale par une rotation d'un quart de tour dans un second sens opposé, l'axe de commande 33 passe de sa position angulaire de fermeture à sa position angulaire d'ouverture, provoquant l'enroulement et le déroulement des fils 51 en sens inverse, et produisant ainsi la commande d'ouverture.

Les figures 13 à 21A/21B illustrent la séquence d'assemblage des moyens de commande déportés 30.

On fait d'abord passer les câbles d'actionnement 51 à travers les orifices radiaux du boîtier 31 (figure 13), et on fixe les secondes extrémités 522 des gaines 52 dans les orifices 321 du carter de commande 32. On dispose les ensuite les parties d'extrémités 532 des fils 53 dans la gorge 332 de l'axe de commande 33, et on plie les fils 51 pour les plaquer axialement vers l'avant le long de l'axe.

On place le palier de fond 36 dans le logement axial 338 de l'axe de commande 33, et on insère l'axe dans le carter 32, jusqu'à ce que le palier 36 repose contre le fond du carter 32 (figure 14).

On enfile ensuite la noix de serrage 35 sur l'axe de commande 33, en orientant la fente de positionnement 354 de façon à ce que les fils 53 viennent s'y engager. Les parties des fils 53 s'étendant axialement vers l'avant à partir de la gorge 332 sont ainsi maintenues à une position angulaire déterminée par rapport à l'axe de commande 33.

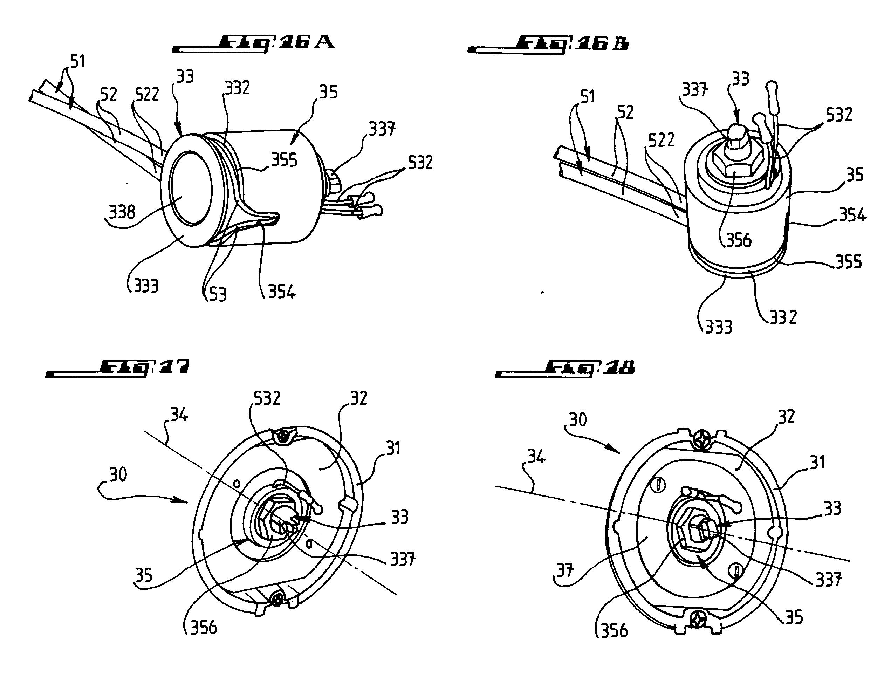

On dispose ensuite les fils 53 dans les encoches radiales à l'avant de la noix de serrage 35, on les maintient en tension, et on visse l'écrou 356 sur la partie filetée de l'axe de commande pour fixer rigidement les fils 53 sur l'axe (figure 15).

On coupe ensuite les extrémités des fils dépassant à l'avant de la noix de serrage 35 pour ramener leur longueur à 20 millimètres environ, et on place sur ces fils des arrêts de câbles de manière à éviter le débobinage des brins du fil et à éviter que l'installateur se blesse. Les arrêts de câbles sont visibles sur les figures 16A et 16B.

On place ensuite le carter, l'axe et la noix de serrage dans le boîtier 31. On notera que la couronne du carter porte sur son bord extérieur des encoches coopérant avec des nervures axiales ménagées sur une face intérieure du boîtier 31 pour bloquer le carter en rotation par rapport au boîtier 31 (figure 17).

On place ensuite le palier avant 37 contre la couronne du carter 32 (figure 18).

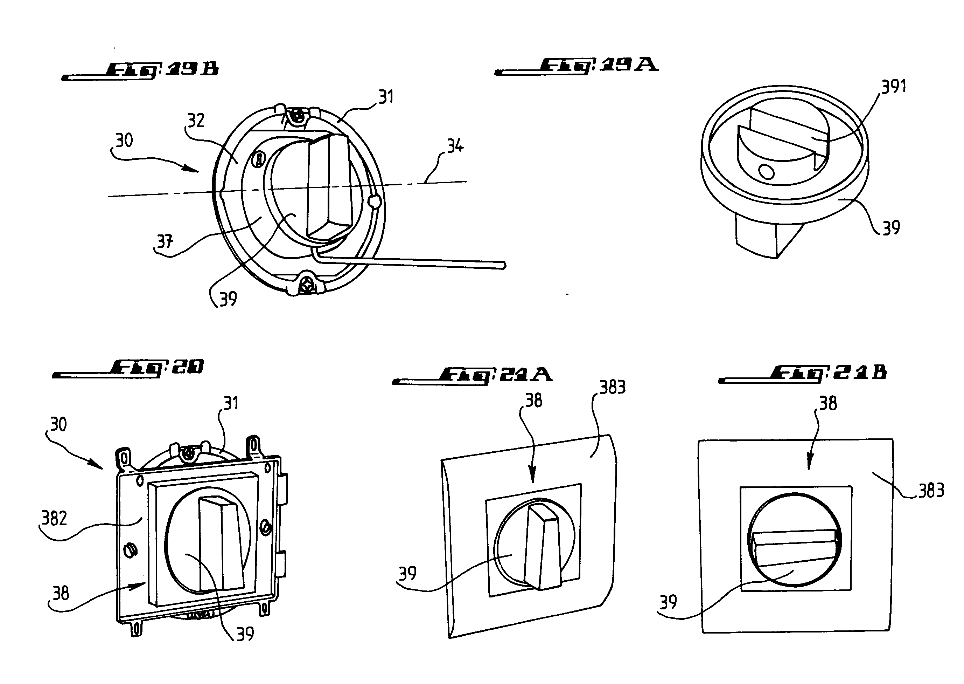

On engage la manette 39 sur la tête 337 de l'axe de commande 33 et on la fixe à l'aide de la vis de serrage (figure 19B). Puis on fixe le support 382 du cadre 38 sur le boîtier 31 (figure 20), on place le cache 383 sur le support (figures 21A et 21B).

Selon un aspect particulièrement avantageux de l'invention, les moyens de commande déportés 30 et/ou les moyens d'actionnement 40 et/ou les câbles d'actionnement 51 sont encastrés dans le mur 2.

La boîte d'encastrement 41 des moyens d'actionnement 40 et le boîtier 31 des moyens de commande sont adaptés à un tel encastrement. Parmi les éléments constituant les moyens de commande 30, seuls le cache 383 et la manette 39 sont apparents.

Les câbles 51 encastrés sont disposés dans une gaine protectrice, du type utilisé pour l'encastrement des câbles électriques.

Les moyens de commande déportés 30 et/ou les moyens d'actionnement 40 et/ou les câbles d'actionnement 51 peuvent également être montés en saillie sur le mur 2 quand celui-ci est constitué de matériaux ne permettant pas l'encastrement, par exemple de briques pleines ou de béton.

La méthode de montage d'un tel dispositif de commande est particulièrement simple. Cette méthode comprend au moins les étapes suivantes :
1/ Pré-assembler les moyens d'actionnement 40 et raccorder les câbles d'actionnement 51 aux moyens d'actionnement 40, en usine ;
2/ Monter les moyens d'actionnement 40 sur l'organe d'obturation 10, sur le site où se trouve le circuit de fluide ; fixer ces moyens d'actionnement 40 sur un support ;
3/ Assembler les moyens de commande déportés 30 et raccorder les câbles d'actionnement 51 aux moyens de commande déportés 30, sur site ; fixer les moyens de commande déportés sur un support.

Dans une variante de réalisation, les câbles d'actionnement 51 peuvent comprendre chacun au moins deux tronçons 54 et des moyens 55 de raccordement mutuel des deux tronçons 534 bout à bout. On peut alors prémonter en usine à la fois les moyens d'actionnement 40 et les moyens de commande déportés 30. La méthode de montage est alors :
1/ Pré-assembler les moyens d'actionnement 40 et raccorder un des tronçons 54 de chaque câble d'actionnement 51 aux moyens d'actionnement 40, en usine ;
2/ Pré-assembler les moyens de commande déportés 30 et raccorder l'autre tronçon 54 de chaque câble d'actionnement aux moyens de commande déportés 30, en usine ;
3/ Monter les moyens d'actionnement 40 sur l'organe d'obturation 10, sur site ; fixer ces moyens sur un support ;
4/ Monter les moyens de commande déportés 30 sur un support, sur site ;
5/ Raccorder mutuellement les deux tronçons 54 de chaque câble d'actionnement 51 à l'aide des moyens de raccordement 55, sur site.

Les moyens de raccordement 55 sont connus en soi, et permettent de rendre les fils 53 des deux tronçons 54 solidaires en translation dans les gaines fixes 52.

On comprend bien que le dispositif de commande décrit ci-dessus présente de multiples avantages.

Il s'adapte aux organes d'obturation couramment utilisés, qui sont des robinets à boisseaux sphériques.

Il utilise des composants du commerce, comme par exemple les boîtiers d'encastrement et le cadre des moyens de commande déportés.

Il est de conception simple, robuste, fiable et économique.

Il fonctionne sans énergie extérieure, à la différence des systèmes de commande électriques.

La manette de commande est facilement manoeuvrable, sans effort excessif pour l'utilisateur.

Les parties apparentes des moyens de commande présentent un aspect proche de celui des interrupteurs électriques actuels, et s'intègrent bien dans l'environnement de la cuisine d'un point de vue esthétique. En revanche, la forme de la manette permet de distinguer facilement celle-ci des interrupteurs électriques.

La position de la manette 39 permet à l'utilisateur d'identifier facilement si l'organe d'obturation 10 est en configuration d'autorisation ou d'interdiction de circulation du fluide. Quand les moyens de commande déportés 30 sont encastrés dans un mur vertical, la manette 39 sera de préférence horizontale dans la position angulaire de fermeture de l'axe de commande 33. La manette 39 sera verticale en position angulaire d'ouverture de l'axe.

Le dispositif de commande peut être vendu sous forme d'un kit préassemblé. Dans une version du dispositif de commande, seuls les moyens d'actionnement 40 sont assemblés en usine et montés sur les câbles d'actionnement. L'installateur assemble sur site les moyens de commande déportés et les raccorde aux câbles d'actionnement. Dans une autre version, les moyens d'actionnement et les moyens de commande déportés sont assemblés en usine et raccordés chacun à des tronçons de câbles. Le rôle de l'installateur se limite à encastrer le dispositif et à raccorder les tronçons de câbles les uns aux autres.

Plusieurs modèles de dispositifs peuvent être mis en vente, équipés de câbles d'actionnement de longueurs différentes. Le dispositif offre ainsi une grande flexibilité quant au choix des positions des moyens d'actionnement et des moyens de commande déportés. Ces derniers peuvent être disposés à l'endroit le plus commode pour l'utilisateur, par exemple au dessus du plan de travail, à proximité de la table de cuisson.

Du fait que la commande déportée est facilement accessible, la sécurité dans la cuisine en est augmentée.

Le dispositif permet également de simplifier l'enchaînement des tâches pour l'installation des cuisines. Le plombier intervient le premier et installe le circuit de fluide et le dispositif de commande encastré dans sa totalité. Le menuisier peut ensuite intervenir pour monter les meubles. Le plombier n'a pas à intervenir après le menuisier, puisque la seule tâche restant à effectuer consiste à raccorder le tuyau flexible 5 d'un côté à la table de cuisson et de l'autre côté à la sortie de l'organe d'obturation.

Les différents éléments du dispositif peuvent également être facilement déposés et remplacés.

Le dispositif de commande peut être installé encastré dans les installations neuves, ou en saillie pour les installations existantes.

Pendant l'installation des moyens de commande déportés, les fils des câbles sortent d'un côté avant de la noix de serrage, de telle sorte qu'il est facile de les saisir et de les maintenir en tension pendant le serrage de l'écrou.

Les gorges de l'axe de commande et de l'axe récepteur forment avec les carters associés des guides pour les fils des câbles. Ces fils s'enroulent autour des axes, qui jouent le rôle de poulies pour ces fils.

La noix de serrage bloque les fils des câbles contre l'axe de commande. Elle assure également le positionnement angulaire des fils autour de l'axe, guide les fils axialement par l'intermédiaire de la fente de positionnement, et assure également le guidage des fils lors de leur changement de direction en sortie de la gorge.

Le dispositif de commande a été décrit ci-dessus dans son application à un organe de blocage d'un circuit de gaz naturel. Il est adapté pour commander un organe de blocage d'un circuit d'alimentation en eau froide, en eau chaude, en vide, en air comprimé, en gaz inerte, en réactifs liquides, en gaz ou en liquide d'un autre type, d'un circuit de soufflage ou d'extraction d'air de ventilation, ou encore d'un circuit d'évacuation de liquide.

Il n'est pas nécessairement implanté dans une cuisine, mais peut être utilisé dans les salles de bain, dans les toilettes, dans les caves ou dans toute autre pièce chez les particuliers. Il peut également être utilisé dans toutes installations industrielles, partout où il est avantageux de déporter la commande loin de l'actionneur pour des raisons de commodité ou de sécurité.

Le dispositif de commande est également adapté à d'autres types d'organe d'obturation que les vannes boisseau, en particulier à toutes les vannes munies d'un organe d'obturation commandé par une tige tournante.

Les diamètres de l'axe récepteur et de l'axe de commande au niveau de leurs gorges respectives sont généralement égaux, ce qui limite la course angulaire de l'axe de commande à un quart de tour pour faire passer l'organe d'obturation de sa configuration d'interdiction à sa configuration d'autorisation. L'effort à fournir pour actionner la manette des moyens de commande est similaire à l'effort nécessaire pour actionner directement une vanne à boisseau sphérique.

Toutefois, il est possible d'introduire une démultiplication dans le dispositif de commande en choisissant des diamètres d'axes différents, pour faciliter ou durcir la manoeuvre de l'axe de commande. Ainsi, si on choisit un diamètre de l'axe de commande plus grand que celui de l'axe récepteur, la rotation de l'axe de commande pour passer de la position de fermeture à celle d'ouverture sera de moins de 90°, mais l'effort à fournir sera plus grand. Inversement, si on choisit un diamètre de l'axe de commande plus petit que celui de l'axe récepteur, la rotation de l'axe de commande pour passer de la position de fermeture à celle d'ouverture sera de plus de 90°, et l'effort à fournir sera plus faible.

Enfin, on notera que le dispositif de commande peut fonctionner avec un câble d'actionnement unique reliant les moyens de commande déportés aux moyens d'actionnement. Dans ce cas, l'extrémité réceptrice du fil 53 du câble est rigidement fixé sur l'axe récepteur, par exemple à l'aide d'une vis.

## Revendications

1. Dispositif de commande d'un circuit de fluide, ce dispositif comprenant un organe d'obturation (10) adoptant sélectivement une configuration d'autorisation de la circulation du fluide dans le circuit ou une configuration d'interdiction de cette circulation, ce dispositif comprenant en outre des moyens de commande déportés (30) disposés à distance de l'organe d'obturation (10) et actionnables manuellement pour produire sélectivement une commande d'ouverture ou de fermeture de l'organe d'obturation (10), des moyens d'actionnement mécaniques (40) coopérant avec l'organe d'obturation (10), et des moyens de transmission mécaniques (50) de la commande d'ouverture ou de fermeture des moyens de commande déportés (30) aux moyens d'actionnement (40) par l'intermédiaire d'au moins un câble d'actionnement mécanique gainé (51), les moyens d'actionnement (40) faisant passer l'organe d'obturation (10) en configuration d'autorisation quand ils reçoivent une commande d'ouverture et en configuration d'interdiction quand ils reçoivent une commande de fermeture, **caractérisé en ce que** le circuit de fluide est fixé sur un mur (2), les moyens d'actionnement (40) étant encastrés dans le mur (2), l'organe d'obturation (10) comprenant une tête de commande (12) mobile, en saillie vers les moyens d'actionnement, coopérant avec un axe récepteur (43) des moyens d'actionnement (40) déplacé par le câble d'actionnement (51).

2. Dispositif selon la revendication 1, **caractérisé en ce que** le câble d'actionnement (51) comprend une gaine fixe (52) et un fil métallique (53) mobile en translation dans la gaine (52) et lié d'un côté aux moyens de commande déportés (30) et de l'autre aux moyens d'actionnement (40), le fil (53) étant entraîné en translation par les moyens de commande déportés (30) dans un premier sens quand ceux-ci sont actionnés pour produire une commande d'ouverture et dans un second sens opposé au premier pour une commande de fermeture .

3. Dispositif selon la revendication 2, **caractérisé en ce que** les moyens de transmission (50) comprennent deux câbles d'actionnement (51) dont les fils (53) respectifs sont déplacés dans des sens mutuellement opposés par les moyens de commande déportés (30).

4. Dispositif selon la revendication 3, **caractérisé en ce que** la tête de commande (12) est mobile en rotation autour d'un axe longitudinal (13) entre des positions angulaires d'interdiction et d'autorisation dans lesquelles l'organe d'obturation (10) adopte respectivement ses configurations d'interdiction et d'autorisation, les moyens d'actionnement (40) comprenant un carter récepteur (42) fixe, l'axe récepteur (43) étant mobile en rotation dans le carter récepteur (42) autour de l'axe longitudinal (13) et solidaire en rotation de la tête de commande (12), des extrémités réceptrices (531) respectives des fils (53) des câbles d'actionnement (51) étant liés à l'axe récepteur (43) et entraînant cet axe récepteur (43) en rotation quand les fils (53) sont déplacés par les moyens de commande déportés (30).

5. Dispositif selon la revendication 4, **caractérisé en ce que** les extrémités réceptrices (531) des deux fils (53) sont liés à des points de l'axe récepteur (43) symétrique par rapport à un plan de symétrie contenant l'axe longitudinal (13), à distance l'un de l'autre.

6. Dispositif selon la revendication 4 ou 5, **caractérisé en ce que** l'axe récepteur (43) comprend une gorge (435) dans laquelle s'enroulent les fils (53) des câbles d'actionnement (51) quand ces fils (53) sont déplacés par les moyens de commande déportés (30).

7. Dispositif selon la revendication 6, **caractérisé en ce que** des premières extrémités des gaines (52) des câbles d'actionnement (51) sont rigidement fixées dans des orifices (423) du carter récepteur (42) débouchant dans la gorge (435).

8. Dispositif selon l'une quelconque des revendications 3 à 7, **caractérisé en ce que** les moyens de commande déportés (30) comprennent un carter de commande fixe (32), et un axe de commande (33) mobile manuellement dans le carter de commande (32) en rotation autour d'un axe de rotation (34) entre une position angulaire de fermeture et une position angulaire d'ouverture, des parties d'extrémités de commande (532) respectives des fils (53) des câbles d'actionnement (51), opposées aux extrémités réceptrices (531), étant rigidement fixées sur l'axe de commande (33), la rotation de cet axe de commande (33) entre ses positions angulaires de fermeture et d'ouverture constituant dans un sens la commande d'ouverture et en sens inverse la commande de fermeture.

9. Dispositif selon la revendication 8, **caractérisé en ce que** l'axe de commande (33) comprend une partie cylindrique (331) coaxiale à l'axe de rotation (34) prolongée d'un côté axial avant par une partie tronconique (334) coaxiale à l'axe de rotation (34) convergeante à partir de la partie cylindrique (331), les moyens de commande déportés (30) comprenant une noix de serrage cylindrique (35) enfilée sur la partie tronconique (334) venant fixer rigidement les parties d'extrémité de commande (532) des fils (53) par pression entre la noix (35) et la partie tronconique (334).

10. Dispositif selon la revendication 9, **caractérisé en ce que** la noix de serrage (35) présente une fente (354) de positionnement des parties d'extrémité de commande (532) des fils (53) autour de l'axe de commande (33).

11. Dispositif selon la revendication 9 ou 10, **caractérisé en ce que** la partie cylindrique (331) de l'axe de commande (33) porte une gorge de commande (332) dans laquelle s'enroulent les fils (53) des câbles d'actionnement (51) quand les moyens de commande déportés (30) sont actionnés.

12. Dispositif selon la revendication 11, **caractérisé en ce que** la gorge de commande (332) est délimitée du côté axial avant par un bord libre (355) de la noix de commande (35) et d'un côté axial opposé au côté avant par un rebord (333) en saillie sur la partie cylindrique de l'axe de commande (33).

13. Dispositif selon la revendication 11 ou 12, **caractérisé en ce que** des secondes extrémités des gaines (52) des câbles d'actionnement (51) opposées aux premières sont rigidement fixées dans des orifices (321) du carter de commande (32) débouchant dans la gorge de commande (332).

14. Dispositif selon la revendication 13, **caractérisé en ce que** les orifices (321) du carter de commande (32) débouchent dans une partie de la gorge de commande (332) opposée à la fente de positionnement (354) de la noix de serrage (35) par rapport à l'axe de rotation (34), les deux fils (53) s'étendant à partir des orifices (321) jusqu'à la fente (354) en suivant deux côtés mutuellement opposés de la gorge (332).

15. Dispositif selon l'une quelconque des revendications 1 à 14, **caractérisé en ce que** les moyens de commande déportés (30) et/ou les câbles d'actionnement (50) sont encastrés dans le mur (2).

16. Dispositif selon l'une quelconque des revendications 1 à 15, **caractérisé en ce que** le fluide est un gaz combustible, notamment du gaz naturel.

17. Dispositif selon la revendication 16, **caractérisé en ce que** le circuit de fluide est un circuit de distribution de gaz combustible chez les particuliers.

18. Méthode de montage d'un dispositif de commande pour un organe d'obturation d'un circuit de fluide conforme à l'une quelconque des revendications précédentes, **caractérisée en ce qu'**elle comprend au moins les étapes suivantes :
1/ Pré-assembler les moyens d'actionnement (40) et raccorder les câbles d'actionnement (51) aux moyens d'actionnement (40), en usine ;
2/ Monter les moyens d'actionnement (40) sur l'organe d'obturation (10), sur site ;
3/ Assembler les moyens de commande déportés (30) et raccorder les câbles d'actionnement (51) aux moyens de commande déportés (30), sur site.

19. Méthode de montage d'un dispositif de commande pour un organe d'obturation d'un circuit de fluide conforme à l'une quelconque des revendications 1 à 17, **caractérisée en ce que** les câbles d'actionnement (51) comprennent chacun au moins deux tronçons (54) et des moyens (55) de raccordement mutuel des deux tronçons (54), et **en ce qu'**elle comprend au moins les étapes suivantes :
1/ Pré-assembler les moyens d'actionnement (40) et raccorder un des tronçons (54) de chaque câble d'actionnement (51) aux moyens d'actionnement, en usine ;
2/ Pré-assembler les moyens de commande déportés (30) et raccorder l'autre tronçon (54) de chaque câble d'actionnement (51) aux moyens de commande déportés (30), en usine ;
3/ Monter les moyens d'actionnement (40) sur l'organe d'obturation (10), sur site ;
4/ Monter les moyens de commande déportés (30) sur un support, sur site ;
5/ Raccorder mutuellement les deux tronçons (54) de chaque câble d'actionnement (51) à l'aide des moyens de raccordement (55), sur site.
